# EUROPÄISCHE PATENTSCHRIFT

(11) **EP 1 179 141 B1**
(45) Veröffentlichungstag und Bekanntmachung des Hinweises auf die Patenterteilung: **25.02.2004**
(21) Anmeldenummer: 00931142.4
(22) Anmeldetag: 09.05.2000
(51) Int. Cl.: F04D 13/06, H02K 5/128

(54) **VORRICHTUNG ZUM WANDELN VON ELEKTRISCHER IN MECHANISCHE ENERGIE UND/ODER UMGEKEHRT, INSBESONDERE SPALTROHRMOTOR**
DEVICE, ESPECIALLY CANNED MOTOR, FOR CONVERTING ELECTRICAL ENERGY INTO MECHANICAL ENERGY AND/OR VICE VERSA
DISPOSITIF, EN PARTICULIER MOTEUR A GAINE, DESTINE A LA CONVERSION D'ENERGIE ELECTRIQUE EN ENERGIE MECANIQUE ET/OU INVERSEMENT

(30) Priorität: 14.05.1999 DE 19922234
(43) Veröffentlichungstag der Anmeldung: 13.02.2002
(73) Patentinhaber: Halm, Richard, 73666 Baltmannsweiler (DE)
(72) Erfinder: Halm, Richard, 73666 Baltmannsweiler (DE)
(74) Vertreter: Crazzolara, Helmut, Dr.
(86) Internationale Anmeldenummer: PCT/EP2000/004122
(87) Internationale Veröffentlichungsnummer: WO 2000/070229

(56) Entgegenhaltungen:
- EP-A- 0 282 755
- DE-A- 4 123 661
- DE-A- 19 628 118
- DE-U- 29 505 575
- FR-A- 1 531 555

## Beschreibung

Die Erfindung betrifft eine Vorrichtung zum Wandeln von elektrischer in mechanische Energie und/oder umgekehrt, insbesondere einen Spaltrohrmotor, mit den Merkmalen des Oberbegriffs des Anspruchs 1.

Bekannte Spaltrohrmotoren, wie sie beispielsweise für den Antrieb von Wasserpumpen eingesetzt werden, weisen in der Regel ein metallisches und an der Pumpe festlegbares Motorengehäuse auf, in dem der Stator des Motors festgelegt ist. Die Herstellung und erforderliche Bearbeitung dieser metallischen Motorengehäuse ist aufwendig und teuer. Moderne Spaltrohrmotoren, wie sie beispielsweise in der DE 44 34 448 A1 beschrieben sind, besitzen demgegenüber ein an der Pumpe festlegbares Gehäuse aus Kunststoff, in dem der Stator des Motors festgelegt ist.

Die DE 37 06 787 zeigt einen Spaltrohrmotor mit einer Statorwicklung, die in einem Gießharzkörper elektrisch isolierend eingebettet ist. In den hohlen Gießharzkörper ist ein Spaltrohr mit strammem Schiebesitz passend eingesetzt. Das Spaltrohr weist an seinem einen Ende einen nach innen ragenden Flansch und an seinem anderen Ende einen nach außen ragenden Flansch auf.

Die DE 195 45 561 A1 zeigt eine Pumpe-Motoreinheit, bei der eine Kreiselpumpe über einen Kühlkörper mit einem Gleichstrommotor verbunden ist, wobei zwischen einem Pumpengehäuse und dem Kühlkörper ein aus Kunststoff bestehender Spalttopf eingespannt ist.

Die DE 196 28 118 A1 zeigt einen Naßläufer-Spaltrohrmotor für Pumpen, bei dem ein Teil des Gehäuses durch einen Stator von annähernd quadratischem Querschnitt gebildet ist, der in den äußeren Eckzonen mit Ausnehmungen für den Eingriff oder Durchtritt von Verbindungsschrauben versehen ist. Das Spaltrohr ist an seinem der Pumpe zugewandten Ende unter Anlage an eine Wickelkopfkappe nach außen umgebördelt.

Zur Erzielung einer ausreichenden und insbesondere axialen Fixierung des Spaltrohrtopfes auch unter Einwirkung des in der Vorrichtung wirkenden Systemdrucks sind hohe Spann- bzw. Klemmkräfte erforderlich. Dies bereitet insbesondere bei der Verwendung von Kunststoffgehäusen Probleme. Damit die dem Systemdruck ausgesetzten Teile des Motors, wie beispielsweise der Spaltrohrtopf, der antriebsseitige Lagerflansch oder das Motorengehäuse selbst, dem Systemdruck und den Temperatureinflüssen ohne unzulässige Verformungen standhalten, ist es erforderlich, den vom Gehäuse und dem Spaltrohrtopf gebildeten Raum, der den Stator aufnimmt, mit einer aushärtbaren Vergußmasse auszugießen. Dadurch geht ein Teil der durch die Verwendung eines Kunststoffgehäuses erzielten Kosten- und Gewichtseinsparung wieder verloren.

Der Erfindung liegt daher das Problem zugrunde, eine Vorrichtung zum Wandeln von elektrischer in mechanische Energie und/oder umgekehrt, insbesondere einen Spaltrohrmotor für eine Heizungsumwälzpumpe, bereitzustellen, die kostengünstig herzustellen und zu warten ist und dennoch eine ausreichende Temperaturbeständigkeit und Festigkeit gegenüber den Systemdrücken aufweist. Insbesondere soll bei Verwendung eines Kunststoffgehäuses die Vorrichtung vergußfrei herstellbar sein.

Das Problem wird durch die im Anspruch 1 bestimmte Vorrichtung gelöst. Besondere Ausführungsarten der Erfindung sind in den Unteransprüchen offenbart.

Das Problem ist erfindungsgemäß dadurch gelöst, daß das Gehäuse an einer der Einrichtung zugewandten Stirnseite mindestens eine Ausnehmung aufweist, in die der an der entsprechenden Stelle eine hakenförmige Ausformung aufweisende Spaltrohrtopf einhängbar ist.

Dadurch, daß das erste Gehäuseteil, insbesondere die Wickelkopfkappe, eine Ausnehmung aufweist, in die der Spaltrohrtopf einhängbar ist, ist der Spaltrohrtopf sicher in dem Gehäuse verankert und vermag dem auch in axialer Richtung wirkenden Systemdruck standzuhalten.

Dadurch, daß die Ausnehmung als ringförmige Nut gebildet ist, ist die Ausnehmung fertigungstechnisch einfach herstellbar, was auch für die mit der Ausnehmung korrespondierende Auskragung am Spaltrohrtopf zutrifft. Die Krümmung der Auskragung ist vorzugsweise stetig verlaufend, insbesondere konstant, d. h. die Auskragung weist einen konstanten Krümmungsradius auf. Beispielsweise ist die Auskragung halbkreisförmig im Querschnitt, jedenfalls ist die Auskragung um mehr als 90° gegenüber der Längsachse des Spaltrohrtopfs zurückgebogen.

Dadurch, daß der Spaltrohrtopf in Anlage mit dem Statorblock und/oder dem Stutzen ist, kann er hohe Systemdrücke aufnehmen und/oder besonders dünnwandig ausgeführt sein.

Dadurch, daß bei einer Vorrichtung, die ein Kunststoffgehäuse sowie einen durch einen Spaltrohrtopf von einem Rotor getrennten und auf einem Statorblock eine Statorwicklung tragenden Stator aufweist und mittels Verbindungsschrauben an einer anzutreibenden oder antreibenden Einrichtung, insbesondere an einer Pumpe bzw. an einem Turbinenrad, festlegbar ist, die Verbindungsmittel auf den Stator wirken und daß zusammen mit dem Stator ein erstes Gehäuseteil an der Einrichtung festlegbar ist, ist die Stabilität der Vorrichtung weiter erhöht.

Das Gehäuse kann dabei ein erstes Gehäuseteil und einen dieses verschließenden Deckel umfassen oder ein erstes und ein zweites Gehäuseteil, wobei das zweite Gehäuseteil gegebenenfalls von einem Deckel verschließbar ist. Die Verbindungsmittel können unmittelbar oder mittelbar, beispielsweise über zwischen dem Verbindungsmittel und dem Stator, insbesondere dem Statorblock, angeordnete Unterlegscheiben oder Abstandshalter, wirken. Dadurch ist vorteilhaft der gegenüber dem Kunststoff-Gehäuse eine hohe Masse und eine hohe Festigkeit aufweisende Stator direkt und nicht über das Gehäuse an der Einrichtung festlegbar, wodurch eine Festlegung des Stators in dem Kunststoff-Gehäuse und insbesondere ein Vergießen des Statorraums entfallen kann. Das Gehäuse ist vielmehr insbesondere durch Zwischenlage zwischen Stator und Einrichtung und/oder durch partiellen Formschluß zwischen Gehäuse und Stator und/oder zwischen Gehäuse und Einrichtung mit diesem zusammen an der Einrichtung festlegbar. Der Stator kann auch an einem ein- oder mehrteilig von der Einrichtung ausgebildeten Flanschteil festlegbar sein. Vorrichtung und Einrichtung bilden ein Motoren- bzw. Generatorenaggregat.

Bei dem Spaltrohrmotor handelt es sich vorzugsweise um einen Drehstrom-Asynchronmotor, der an einem einphasigen Wechselstromnetz mit einer Kondensator-Hilfsphase betreibbar ist. Der Spaltrohrtopf kann einstückig oder mit einem aufgeschweißten und beispielsweise eine Aufnahme für eine Lagerbuchse bildenden Boden ausgebildet sein und ist vorzugsweise aus einem korrosionsbeständigen und nicht magnetisierbaren, insbesondere para- oder diamagnetischen Werkstoff, insbesondere Edelstahl, gefertigt. Der Stator ist aus Kostengründen vorzugsweise als Statorblechpaket ausgebildet; kann alternativ oder ergänzend hierzu aber auch aus einem ferrimagnetischen, elektrisch nicht leitfähigen Werkstoff bestehen. Bei der anzutreibenden Einrichtung handelt es sich insbesondere um eine Wasserpumpe, beispielsweise eine Umwälzpumpe in einer Heizungs- oder Wasserversorgungsanlage.

Dadurch, daß die Verbindungsmittel auf den Statorblock wirken, sind hohe Verbindungskräfte anwendbar und die Statorwicklung ist nicht unmittelbar beansprucht. Durch die Lösbarkeit der Festlegung ist der Wartungs- und Reparaturaufwand herabgesetzt.

Dadurch, daß der Statorblock Öffnungen oder Ausnehmungen für den Eingriff der Verbindungsmittel aufweist, ist der Montageaufwand gering. Alternativ hierzu kommt in Betracht, den Stator mittels von ihm beabstandet geführte Klemmittel, die ihn an seiner von der Einrichtung abgewandten Stirnfläche hintergreifen, klemmend an der Einrichtung festzulegen.

Das erste Gehäuseteil ist vorzugsweise zwischen dem Stator, insbesondere dem Statorblock, und der Einrichtung, gegebenenfalls unter Zwischenlage von Dichtmitteln und/oder von Flanschteilen, festklemmbar. Es weist hierfür Durchgangslöcher für die Verbindungsmittel auf.

Dadurch, daß das Gehäuse einstückig eine Wickelkopfkappe ausbildet, sind die Herstellkosten weiter reduziert. Die Statorwicklung ist insbesondere in Richtung auf die Einrichtung in Anlage an der Wickelkopfkappe, stützt diese gegen den Systemdruck ab und erhöht dadurch die Festigkeit der Vorrichtung.

Dadurch, daß die Wickelkopfkappe vorzugsweise einstückig einen Stutzen bildet, der in Anlage mit dem Statorblock ist, ist bei erhöhter Festigkeit der Vorrichtung der Herstellaufwand weiter reduziert. Durch die im wesentlichen gleichen Innendurchmesser von Stutzen und Statorblock bilden diese eine Abstützung des an ihnen anliegenden Spaltrohrtopfs.

Dadurch, daß das Gehäuse zweiteilig ausgeführt ist, ist der Montageaufwand der Vorrichtung reduziert. Soweit das erste und zweite Gehäuseteil sich im Bereich des Statorblocks soweit erstrecken, daß sie den Statorblock axial vollständig umschließen, ist er gegenüber der Umgebung vollständig abgedeckt. An der Nahtstelle der beiden Gehäuseteile im Bereich des Statorblocks können diese beispielsweise aneinanderstoßen, sich überlappen, ineinander eingreifen oder anderweitig formschlüssig zusammenwirken und bei Bedarf sind vorzugsweise einstückig mit einem oder beiden der Gehäuseteile ausgebildete Dichtmittel vorsehbar, beispielsweise Dichtlippen, Dichtsicken oder Dichtlabyrinthe. Soweit das erste und zweite Gehäuseteil sich nur bis zum jeweiligen Ende des Statorblocks erstrecken, umschließen sie den Statorblock axial nicht vollständig, wodurch die Wärmeableitung vom Statorblock an die Umgebung verbessert ist. Vorzugsweise bilden beide Gehäuseteile an ihrem dem Statorblock zugewandten Ende ringförmige Schultern aus, wodurch sich vorteilhaft eine vereinfachte Zentrierung ergibt.

Dadurch, daß das zweite Gehäuseteil einen zweiten, mit dem Spaltrohrtopf zusammenwirkenden Stutzen ausbildet, ergibt sich mit einfachen Mitteln eine zuverlässige Zentrierung des zweiten Gehäuseteils bei der Montage bei gleichzeitig erhöhter Festigkeit der Vorrichtung.

Dadurch, daß das Gehäuse einen Anschlußraum für die Anschluß- und/oder Betriebsmittel bildet, ist die elektrische Installation der Vorrichtung einfach durchführbar. Der Hilfsraum kann beispielsweise auch den Kondensator für die Bereitstellung der Hilfsphase aufnehmen.

Dadurch, daß der Deckel einen Deckelrahmen und eine die Wärmeableitung aus dem Anschlußraum fördernde, insbesondere metallische Deckelplatte umfaßt, ist die Temperaturbeständigkeit der Vorrichtung weiter erhöht. Die Deckelplatte kann dabei die Wärmekonvektion fördernde Öffnungen aufweisen oder geschlossen sein. Vorzugsweise besteht die Deckelplatte aus Aluminium.

Weitere Vorteile, Merkmale und Einzelheiten der Erfindung ergeben sich aus den Unteransprüchen sowie der nachfolgenden Beschreibung, in der unter Bezugnahme auf die Zeichnung ein Ausführungsbeispiel im einzelnen beschrieben ist. Dabei können die in den Ansprüchen und in der Beschreibung erwähnten Merkmale jeweils einzeln für sich oder in beliebiger Kombination erfindungswesentlich sein.

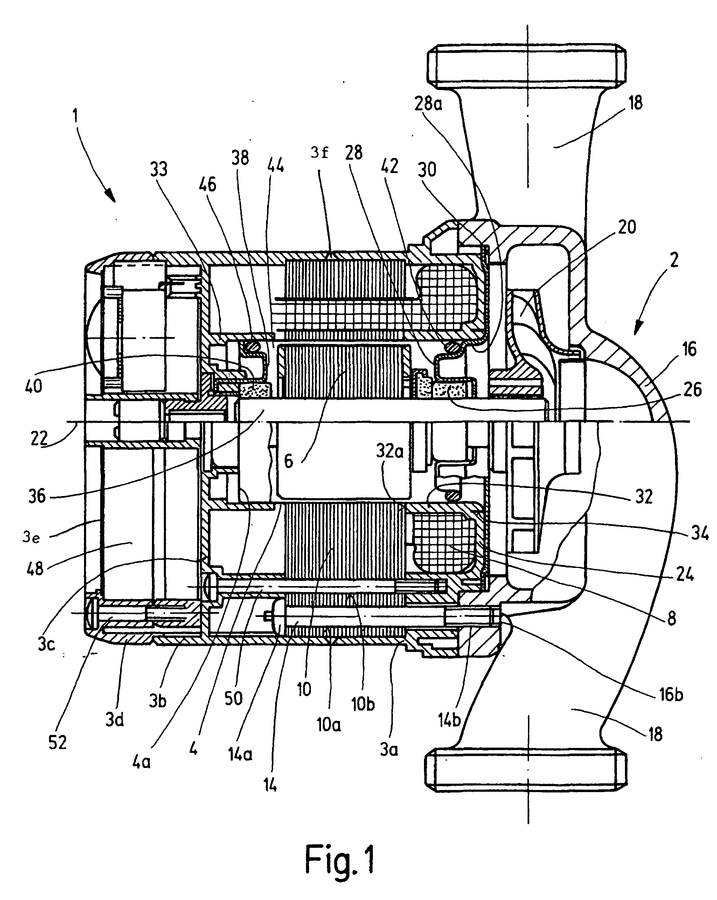

- Fig. 1: zeigt eine Seitenansicht einer erfindungsgemäßen Vorrichtung und einer Wasserpumpe, teilweise geschnitten und teilweise aufgebrochen.

Die Fig. 1 zeigt eine Seitenansicht einer erfindungsgemäßen Vorrichtung 1 und einer Pumpe 2, insbesondere eine Wasserpumpe, teilweise geschnitten und teilweise aufgebrochen. In dem gewählten Ausführungsbeispiel handelt es sich bei der Vorrichtung 1 um einen Spaltrohrmotor, mit einem ersten Gehäuseteil 3a und einem durch einen Spaltrohrtopf 4 von einem Rotor 6 getrennten und einen eine Statorwicklung 8 tragenden Statorblock 10 umfassenden Stator 8, 10. Der Statorblock 10 ist dabei aus im wesentlichen quadratischen und abgerundete Ecken aufweisenden Statorblechen zusammengesetzt und weist in den Eckenbereichen erste Bohrungen 10a auf. Auf den Statorblock 10 wirkende erste Verbindungsschrauben 14, die mit ihrem Schraubenkopf 14a an dem Statorblock 10 anliegen und die durch die Bohrungen 10a hindurchgreifen, sind mit ihrem Außengewinde 14b mit Gewindebohrungen 16b des Pumpengehäuses 16 oder einem diesem zugeordneten Flansch verbindbar. Das Pumpengehäuse 16 weist zwei gleichachsig ausgerichtete Anschlußstutzen 18 auf und umfaßt das vom Spaltrohrmotor 1 angetriebene Flügelrad 20. In Umkehrung des Energieflusses kann das Flügelrad 20 auch als Turbinenrad wirken und der hiervon angetriebene Spaltrohrmotor 1 wirkt als Generator.

Das erste Gehäuseteil 3a bildet unter Ausformung eines ringförmigen und mit der Antriebsachse 22 einen rechten Winkel einschließenden Flanschbereiches 24 eine Wickelkopfkappe aus, welche die Statorwicklung 8 aufnimmt. Die Statorwicklung 8 ist dabei dreiseitig in Anlage an dem ersten Gehäuseteil 3a und stützt insbesondere den Flanschbereich 24 gegen den in der Pumpe 2 herrschenden Systemdruck. Zwischen dem ersten Gehäuseteil 3a, insbesondere dem Flanschbereich 24, und dem Pumpengehäuse 16 ist ein eine Aufnahme für eine pumpenseitige Lagerbuchse 26 bildender pumpenseitiger Lagerflansch 28 angeordnet, der sich in einem stutzenförmigen Abschnitt 28a am ersten Gehäuseteil 3a zentriert, und mittels einer umlaufenden Ringdichtung 30 eine Abdichtung gegenüber dem Arbeitsraum der Pumpe 2 bewirkt.

Im Anschluß an den Flanschbereich 24 bildet die Wickelkopfkappe einen ersten Stutzen 32, der an seinem von der Pumpe 2 abgewandten Stirnende 32a in Anlage mit dem Statorblock 10 ist und sich an diesem abstützt. Der Innendurchmesser des ersten Stutzens 32 entspricht dabei im wesentlichen dem innendurchmesser des Statorblocks 10. Im Abschnitt zwischen dem Flanschbereich 24 und dem ersten Stutzen 32 weist das erste Gehäuseteil 3a und insbesondere die Wickelkopfkappe eine ringförmige Nut 34 auf, in die eine entsprechende und im dargestellten Querschnitt hakenförmige Auskragung des Spaltrohrtopfs 4 eingreift, welcher auf diese Weise in das erste Gehäuseteil 3a einhängbar ist. Ergänzend kann der Spaltrohrtopf 4 noch verklebt werden, insbesondere die Auskragung in die Nut 34 eingeklebt werden. Der Spaltrohrtopf 4 trennt den Stator 8, 10 vom Rotor 6. Soweit der den Rotor 6 aufnehmende Raum des Motors auch das Arbeitsmedium der Pumpe 2, beispielsweise Wasser, aufnehmen kann, spricht man von einem Naßläufer-Spaltrohrmotor. Der Spaltrohrtopf 4 ist dabei im dargestellten Ausführungsbeispiel einstückig mit einer Bodenfläche 4a ausgebildet, die an dem von der Pumpe 2 entfernten Ende der Antriebswelle 36 eine Aufnahme 38 für eine zweite Lagerbuchse 40 bildet. Ein in einem von dem Lagerflansch 28 und dem Spaltrohrtopf 4 gebildeten Ringraum angeordneter erster Dichtring 42 erhöht die Dichtwirkung zwischen dem Rotorraum 44 und der Umgebung ebenso wie ein insbesondere im Fall einer zweiteiligen Ausführung des Spaltrohrtopfes 4 vorgesehener zweiter Dichtring 46, der in einem von der Aufnahme 38 und dem rohrförmigen Abschnitt des Spaltrohrtopfes 4 gebildeten Ringraum angeordnet ist.

Das erste Gehäuse 3a erstreckt sich in axialer Richtung umfänglich bis zum pumpenseitigen Ende des Statorblocks 10. Unter Belassung eines Ringspalts 3f schließt sich daran ein zweites Gehäuseteil 3b an, welches mittels einer mit der Antriebsachse 22 einen rechten Winkel einschließenden Trennwand 3c den Rotorraum 44 und den Statorraum von einem durch das zweite Gehäuseteil 3b gebildeten und mit einem Deckel 3d, 3e verschließbaren Anschlußraum 48 für die elektrischen Anschluß- und/oder Betriebsmittel trennt. Die axiale Ausdehnung des Ringspaltes 3f ist so gewählt, daß die Wärmeableitung vom Statorblock 10 an die Umgebung in ausreichendem Maße gewährleistet ist. Gegebenenfalls kann die axiale Ausdehnung des Ringspalts 3f im wesentlichen der axialen Ausdehnung des Statorblocks 10 entsprechen. Sofern eine vollständige Umschließung des Statorblocks 10 gewünscht oder erforderlich ist, entfällt der Ringspalt 3f und das erste und zweite Gehäuseteil 3a, 3b liegen aneinander an. Der Deckel 3d, 3e umfaßt im dargestellten Ausführungsbeispiel einen Deckelrahmen 3d und eine in diesen eingesetzte Deckelplatte 3e aus Aluminium. Das zweite Gehäuseteil 3b zentriert sich über einen von ihm vorzugsweise einstückig ausgebildeten zweiten Stutzen 33 an dem der Pumpe 2 abgewandten Ende des Spaltrohrtopfs 4. Das zweite Gehäuseteil 3b ist mittels zweiter Verbindungsschrauben 50, die durch zweite Bohrungen 10b des Statorblocks 10 hindurchgreifen und endseitig ein Außengewinde aufweisen, mit dem ersten Gehäuseteil 3a verbindbar. Über dritte Verbindungsmittel 52 ist der Deckelrahmen 3d am zweiten Gehäuseteil 3b festlegbar.

## Patentansprüche

1. Vorrichtung zum Wandeln von elektrischer in mechanische Energie und/oder umgekehrt, insbesondere Spaltrohrmotor (1), die ein Kunststoff-Gehäuse (3a, 3b) sowie einen durch einen Spaltrohrtopf (4) von einem Rotor (6) getrennten und auf einem Statorblock (10) eine Statorwicklung (8) tragenden Stator (8, 10) umfaßt und mittels Verbindungsmitteln (14) an einer anzutreibenden oder antreibenden Einrichtung, insbesondere an einer Pumpe (2) bzw. an einem Turbinenrad, festlegbar ist, wobei die Verbindungsmittel (14) auf den Stator (8, 10) wirken und zusammen mit dem Stator (8, 10) ein erstes Gehäuseteil (3a) an der Einrichtung (2) festlegbar ist, **dadurch gekennzeichnet, daß** das erste Gehäuseteil (3a) an seiner der Einrichtung (2) zugewandten Stirnseite mindestens eine Ausnehmung aufweist, in die der an der entsprechenden Stelle eine hakenförmige Ausformung aufweisende Spaltrohrtopf (4) einhängbar ist.

2. Vorrichtung nach Anspruch 1, **dadurch gekennzeichnet, daß** die Ausnehmung durch eine ringförmige Nut (34) gebildet ist, in die der Spaltrohrtopf (4) mittels einer ringförmigen und im Querschnitt hakenförmigen Auskragung einhängbar ist.

3. Vorrichtung nach Anspruch 1 oder 2, **dadurch gekennzeichnet, daß** der Spaltrohrtopf (4) in Bezug auf eine Antriebsachse (22) der Vorrichtung (1) in radialer Anlage an dem Statorblock (10) und/oder mit dem ersten Gehäuseteil (3a) ist.

4. Vorrichtung nach einem der Ansprüche 1 bis 3, **dadurch gekennzeichnet, daß** die Verbindungsmittel (14) auf den Statorblock (10) wirken und dieser an der Einrichtung (2) lösbar festlegbar, insbesondere verschraubbar, ist.

5. Vorrichtung nach einem der Ansprüche 1 bis 4, **dadurch gekennzeichnet, daß** der Statorblock (10) im wesentlichen rechteckig und insbesondere quadratisch ist und in den Eckenbereichen eine Bohrung (10a) oder eine axiale Nut für die Aufnahme der Verbindungsmittel (14) aufweist.

6. Vorrichtung nach einem der Ansprüche 1 bis 5, **dadurch gekennzeichnet, daß** das erste Gehäuseteil (3a) zwischen dem Stator (8, 10), insbesondere dem Statorblock (10), und der Einrichtung (2) festklemmbar ist.

7. Vorrichtung nach einem der Ansprüche 1 bis 6, **dadurch gekennzeichnet, daß** das erste Gehäuseteil (3a) einstückig eine Wickelkopfkappe zur Aufnahme der Statorwicklung (8) bildet.

8. Vorrichtung nach Anspruch 7, **dadurch gekennzeichnet, daß** die Wickelkopfkappe einen ersten Stutzen (32) bildet, der an seinem von der Einrichtung (2) abgewandten Stirnende (32a) in Anlage mit dem Statorblock (10) ist und dessen Innendurchmesser dem Innendurchmesser des Statorblocks (10) entspricht.

9. Vorrichtung nach einem der Ansprüche 1 bis 8, **dadurch gekennzeichnet, daß** das erste Gehäuseteil (3a) sich axial bis zu dem der Einrichtung (2) zugewandten Ende des Statorblocks (10) erstreckt und daß ein sich axial bis zu dem der Einrichtung (2) abgewandten Ende des Statorblocks (10) erstreckendes zweites Gehäuseteil (3b) mit dem ersten Gehäuseteil (3a) verbindbar ist, insbesondere durch den Statorblock (10) hindurch mit dem ersten Gehäuseteil (3a) lösbar verbindbar ist.

10. Vorrichtung nach Anspruch 9, **dadurch gekennzeichnet, daß** das erste (3a) und zweite Gehäuseteil (3b) im Bereich des Statorblocks (10) axial beabstandet sind.

11. Vorrichtung nach Anspruch 9, **dadurch gekennzeichnet, daß** das erste und zweite Gehäuseteil (3a, 3b) sich im Bereich des Statorblocks (10) so weit erstrecken, daß sie (3a, 3b) den Statorblock (10) axial vollständig umschließen.

12. Vorrichtung nach einem der Ansprüche 9 bis 11, **dadurch gekennzeichnet, daß** das zweite Gehäuseteil (3b) einen zweiten Stutzen (33) ausbildet, mittels dem das zweite Gehäuseteil (3b) an einem der Einrichtung (2) abgewandten Ende des Spaltrohrtopfs (4) zentrierbar ist.

13. Vorrichtung nach einem der Ansprüche 1 bis 12, **dadurch gekennzeichnet, daß** das Gehäuse (3a, 3b) einen vom den Rotor (6) aufnehmenden Rotorraum (44) abgetrennten und mit einem Deckel (3d, 3e) verschließbaren Anschlußraum (48) für die elektrischen Anschluß- und/oder Betriebsmittel bildet.

14. Vorrichtung nach Anspruch 13, **dadurch gekennzeichnet, daß** der Deckel einen Deckelrahmen (3d) und eine die Wärmeableitung aus dem Anschlußraum (48) fördernde, insbesondere metallische Deckelplatte (3e) umfaßt.

## Claims

1. Device for conversion of electrical into mechanical energy and/or vice versa, in particular canned motor (1) which includes a plastic housing (3a, 3b) together with a stator (8, 10) separated by a can (4) from a rotor (6) and bearing a stator winding (8) supported on a stator block (10) and which can be attached by connection means (14) to a device which is either driving or driven, in particular to a pump (2) or a turbine wheel, where the means of connection (14) act upon the stator (8, 10) and together with the stator (8, 10) a first housing part (3a) can be fixed to the device (2), **characterised in that** the first housing part (3a) comprises at least one recess on the face pointing towards the device (2), into which recess the can (4), which comprises a hook-shaped projection, can engage.

2. Device according to claim 1, **characterised in that** the recess is formed by an annular groove (34), in which the can (4) can engage by means of an annular projection with a hook-shaped cross-section.

3. Device according to claim 1 or 2, **characterised in that** the can (4) in relation to a driving axle (22) of the device (1) abuts radially on to the stator block (10) and/or to the first housing part (3a).

4. Device according to one of claims 1 to 3, **characterised in that** the means of connection (14) act on the stator block (10) and said stator block is removably fixed to the device (2), in particular screwed on.

5. Device according to one of claims 1 to 4, **characterised in that** the stator block (10) is essentially rectangular and in particular square and in the corner areas displays a borehole (10a) or an axial groove to receive the connection means (14).

6. Device according to one of claims 1 to 5, **characterised in that** the first housing part (3a) can be clamped into position between the stator (8,10), in particular the stator block (10), and the device (2).

7. Device according to one of claims 1 to 6, **characterised in that** the first housing part (3a) integrally forms an end bell to house the stator winding (8).

8. Device according to claim 7, **characterised in that** the end bell forms a first connection piece (32) which on its front end (32a) facing away from the device (2) abuts the stator block (10) and the internal diameter of which corresponds to the internal diameter of the stator block (10).

9. Device according to one of claims 1 to 8, **characterised in that** the first housing part (3a) extends axially to the end of the stator block (10) facing towards the device (2) and that a second housing part (3b) extending axially to the end of the stator block (10) facing away from the device (2) can be connected to the first housing part (3a), in particular being detachably connected with the first housing part (3a) by the stator block (10).

10. Device according to claim 9, **characterised in that** the first (3a) and second housing part (3b) are axially spaced in the area of the stator block (10).

11. Device according to claim 9, **characterised in that** the first and second housing parts (3a, 3b) extend in the area of the stator block (10) so far thar they (3a, 3b) entirely axially envelop the stator block (10).

12. Device according to one of claims 9 to 11, **characterised in that** the second housing part (3b) forms a second connection part (33), by means of which the second housing part (3b) can be centred on one end of the can (4) facing away from the device (2).

13. Device according to one of claims 1 to 12, **characterised in that** the housing (3a, 3b) forms a connection space (48) for the electrical connection and/or driving means, which can be closed with a cover (3d, 3e) and which is separated from the rotor space (44) housing the rotor (6).

14. Device according to claim 13, **characterised in that** the cover consists of a cover frame (3d) and a cover plate (3e), in particular made of metal, which promotes heat conduction from the connection space (48).

## Revendications

1. Dispositif destiné à la conversion d'énergie électrique en énergie mécanique et/ou inversement, en particulier un moteur à gaine (1), qui comprend un boîtier en plastique (3a, 3b) ainsi qu'un stator (8, 10) séparé d'un rotor (6) par un pot de gaine (4) et portant un enroulement statorique (8) sur un bloc stator (10) et qui peut être fixé à l'aide de moyens de liaison (14) sur une installation motrice ou entraînée, en particulier sur une pompe (2) ou sur une roue de turbine, lesdits moyens de liaison (14) agissant sur le stator (8, 10) et une première partie du boîtier (3a) pouvant être fixée à l'installation (2) conjointement avec le stator (8, 10), **caractérisé en ce que** la première partie du boîtier (3a) présente sur son front dirigé vers l'installation (2) au moins un creux dans lequel le pot de gaine (4), présentant une forme crochue à l' emplacement correspondant, peut être accroché.

2. Dispositif selon la revendication 1, **caractérisé en ce que** le creux est formé par une rainure annulaire (34), dans laquelle le pot de gaine (4) peut être accroché au moyen d'une saillie annulaire et en forme de crochet en coupe transversale.

3. Dispositif selon la revendication 1 ou 2,
**caractérisé en ce que**, par rapport à un axe d'entraînement (22) du dispositif (1), le pot de gaine (4) est en appui radial sur le bloc stator (10) et/ou avec la première partie du boîtier (3a).

4. Dispositif selon l'une quelconque des revendications 1 à 3, **caractérisé en ce que** les moyens de liaison (14) agissent sur le bloc stator (10) et **en ce que** ce dernier peut être fixé de manière amovible, en particulier vissé, sur l'installation (2).

5. Dispositif selon l'une quelconque des revendications 1 à 4, **caractérisé en ce que** le bloc stator (10) est rectangulaire pour l'essentiel, et en particulier carré, et **en ce qu'**il présente au niveau des angles un alésage (10a) ou une rainure axiale destinée à recevoir les moyens de liaison (14).

6. Dispositif selon l'une quelconque des revendications 1 à 5, **caractérisé en ce que** la première partie du boîtier (3a) peut être bloquée entre le stator (8, 10), en particulier le bloc stator (10), et l'installation (2).

7. Dispositif selon l'une quelconque des revendications 1 à 6, **caractérisé en ce que** la première partie du boîtier (3a) forme d'une seule pièce un couvre-enroulement destiné à recevoir l'enroulement de stator (8).

8. Dispositif selon la revendication 7, **caractérisé en ce que** le couvre-enroulement forme un premier raccord (32) qui est en appui avec le bloc stator (10) sur son front (32a) dirigé à l'opposé de l'installation (2) et dont le diamètre intérieur correspond au diamètre intérieur du bloc stator (10).

9. Dispositif selon l'une quelconque des revendications 1 à 8, **caractérisé en ce que** la première partie du boîtier (3a) s'étend de manière axiale jusqu'à l'extrémité du bloc stator (10) dirigée vers l'installation (2), et **en ce qu'**une deuxième partie du boîtier (3b) s'étendant de manière axiale jusqu'à l'extrémité du bloc stator (10) dirigée à l'opposé de l'installation (2) est raccordable à la première partie du boîtier (3a), et est, en particulier, raccordable de manière amovible à la première partie du boîtier (3a) à travers le bloc stator (10).

10. Dispositif selon la revendication 9, **caractérisé en ce que** la première (3a) et la deuxième partie du boîtier (3b) sont écartées de manière axiale au niveau du bloc stator (10).

11. Dispositif selon la revendication 9, **caractérisé en ce que** la première et la deuxième partie du boîtier (3a, 3b) s'étendent au niveau du bloc stator (10) de telle manière qu'elles (3a, 3b) entourent complètement le bloc stator (10) de manière axiale.

12. Dispositif selon l'une quelconque des revendications 9 à 11, **caractérisé en ce que** la deuxième partie du boîtier (3b) forme un deuxième raccord (33) au moyen duquel la deuxième partie du boîtier (3b) peut être centrée sur une extrémité du pot de gaine (4) dirigée à l'opposé de l'installation (2).

13. Dispositif selon l'une quelconque des revendications 1 à 12, **caractérisé en ce que** le boîtier (3a, 3b) forme un espace de raccordement (48) fermé par un couvercle (3d, 3e) et séparé par la chambre du rotor (44) recevant le rotor (6) pour les moyens de connexion électrique et/ou le matériel d'exploitation.

14. Dispositif selon la revendication 13, **caractérisé en ce que** le couvercle comprend un cadre de couvercle (3d) et une plaque de couvercle (3e), en particulier métallique, favorisant la dissipation de la chaleur en dehors de l'espace de raccordement (48).
